Europäisches Patentamt

European Patent Office

Office européen des brevets

(11) Publication number: **0 028 513**
**B1**

# EUROPEAN PATENT SPECIFICATION

(45) Date of publication of patent specification: 23.05.84

(21) Application number: **80303874.4**

(22) Date of filing: **30.10.80**

(51) Int. Cl.³: **E 21 C 37/00, C 04 B 7/00, C 04 B 7/35, C 04 B 7/34, C 04 B 1/00, C 09 K 3/00, F 42 D 3/00, F 42 D 3/02, F 42 D 3/04**

(54) A method of demolition and method of preparing a demolition agent.

(30) Priority: **01.11.79 JP 140501/79**

(43) Date of publication of application:
**13.05.81 Bulletin 81/19**

(45) Publication of the grant of the patent:
**23.05.84 Bulletin 84/21**

(84) Designated Contracting States:
**AT CH DE FR GB IT LI SE**

(56) References cited:
**DE-A-2 023 695**
**DE-A-2 619 790**
**DE-B-2 314 562**
**GB-A-1 298 022**
**GB-A-1 403 586**
**GB-A-1 403 587**
**US-A-1 872 512**
**US-A-3 884 710**

(73) Proprietor: **ONODA CEMENT COMPANY, LTD.**
**6276, Oaza Onoda**
**Onoda-shi Yamaguchi (JP)**

(72) Inventor: **Kawano, Toshio**
**5-6-4, Aobadai**
**Ichihara-shi Chiba (JP)**
Inventor: **Ishii, Shiro**
**2-19-56, Ikego**
**Zushi-shi Kanagawa (JP)**
Inventor: **Soeda, Koichi**
**4-9-14, Hongo**
**Bunkyo-ku Tokyo (JP)**
Inventor: **Migita, Jyunichiro**
**3798, Shinyoshida-cho Kohoku-ku**
**Yokohama-shi Kanagawa (JP)**

(74) Representative: **Ruffles, Graham Keith et al**
**MARKS & CLERK 57-60 Lincoln's Inn Fields**
**London WC2A 3LS (GB)**

Courier Press, Leamington Spa, England.

## Description

This invention relates to a method of demolition of brittle materials such as rock, concrete and the like, and a method of preparing a demolition agent.

Various demolition methods have been proposed wherein an aqueous slurry of an expansive material is filled into a hole drilled in a brittle material such as rock, concrete or the like to be demolished, and demolition is achieved by means of an expansive stress of the slurry.

It has been considered that quick lime can be used as a demolition agent because of its great expansive stress. It has, however, the disadvantage that since the quick lime available on the market has a very high hydration speed and may generate heat and expand by hydration immediately after being mixed with water, its fluidity is reduced rapidly, making it difficult to pour a slurry of quick lime into the hole. Even though the slurry can be poured, and because of the lack of hydraulic properties, the expansive stress may escape in the direction of the hole opening, so that the pressure against the side wall of the hole may become very low. In practice, it therefore can not be used as a demolition agent.

In order to overcome this disadvantage a method may be considered in which slurry of a quick lime is poured into a hole and thereupon a binding cap is fixed at the opening of the hole to confine the escape of the expansive stress, but this is not a preferable method because of its troublesome operation.

An alternative method can also be considered in which silicofluoride or the like can be added to quick lime to restrict the hydration speed of the quick lime. However, the resultant mixture can not be expected to obtain a high expansive stress, since quick lime has no suitable self-hydraulic settling properties and the expansive stress of quick lime may escape to the direction of the opening of the hole.

In our Japanese Patent Application No. 45.35252 published on 25 March 1975 as No. 50-7372, we describe a method for breaking a concrete pipe by expansion. A slurry containing quick lime, calcined dolomite and the like as main expansion agent, silicofluoride, and further optional materials is placed in a chamber formed in the pipe using an inserted rod with lower and upper endplates.

There still remains a need for a hydraulic demolition agent which can embody the beneficial characteristics of quick lime as an expansive agent but which hydrates at a relatively low speed giving a large expansion coefficient and expansive stress.

We have now discovered that when limestone is calcined to produce a hard-burned quick lime whose crystal size is 10 to 100 micron and then the quick lime is pulverized to 1500 to 5000 cm²/g (Blaine) specific surface area, the powdery hard-burned quick lime thus obtained can generate significant hydration heat after 15 minutes at a mixing ratio of 30 to 40% to water at room temperature. However an aqueous slurry of the hard-burned quick lime lacks self-hydraulic properties, as mentioned before. We have further found that if hydraulic materials such as Portland cement and modifying agents such as water reducing agents are added to the hard-burned quick lime, it is possible also to overcome this disadvantage. A certain mixing ratio of the hydraulic material and the modifying agent to the powdery hard-burned quick lime can give a big enough expansion stress to demolish brittle materials without closing the hole provided in a binding cap.

Thus, we have been able to formulate a hydraulic demolition agent which can hydrate at a relatively low speed, give a large expansive coefficient and expansive stress and demolish a brittle material by means of its expansive stress generated upon hydration. Moreover, such a hydraulic demolition agent can be used at an atmospheric temperature of 5°C or above.

In accordance with the present invention, there is provided a method of preparing a demolition agent which comprises calcining limestone at 1300 to 1600°C to produce a hard-burned quick lime whose crystal size is 10 to 100 microns, pulverizing the resulting quick lime to 1500 to 5000 cm²/g (Blaine), mixing 5 to 70 parts by weight of a hydraulic material with 30 to 95 parts by weight of the powdery hard-burned quick lime, and adding to 100 parts by weight of the mixture of the hard-burned quick lime and the hydraulic material from 0.1 to 5 parts by weight of a modifying agent.

The invention further provides a method of demolition of a brittle material in which one or more holes are drilled in the brittle material, and the holes are filled with an aqueous slurry of a demolition agent which acts by generating expansive stress upon hydration, characterised in that the demolition agent comprises a powdery material which comprises 30 to 95 parts by weight of a powdery hard-burned quick lime calcined at 1300 to 1600°C with crystal size from 10 to 100 microns pulverized to 1500 to 5000 cm²/g (Blaine), 5 to 70 parts by weight of hydraulic material and relative to 100 parts by weight of the mixture of the powdery hard-burned quick lime and the hydraulic material, 0.1 to 5 parts by weight of a water reducing agent.

The suitable temperature and necessary time for the calcination to prepare a hard-burned quick lime depend on the type and size of kiln. As an example 1 to 7 days are usually required in a shaft kiln. Addition of 3 to 10% by weight of $CaSO_4$, $CaF_2$, $Fe_2O_3$ or clay reduced the calcining temperature and/or the necessary time for calcining limestone. Calcining with the addition of such compounds at 1200°C for 2.5 days is equivalent to calcining without addition at 1400°C for 2.5 days. Preferred crystal sizes in the hard-burned quick lime for the present invention are 20 to 40 micron.

Since small amounts of finely powdered quick lime often adhere on the surface of the hard-burned quick lime and since the overall hydration reaction of quick lime is promoted by the heat generated by the hydration of the fine powder, the addition of a modifying agent, is employed to reduce the hydration heat. The preferred agents used in the present invention are lignin types, sulphonates of higher alcohols, oxyorganic acid types, alkylarylsulphonates types and their high condensates, polyoxyethylene alkylether types, polyol composite types, water-soluble melamine resin types, $\beta$-naphthalene sulphonic acid-formalin condensate types, and mixtures thereof.

Furthermore, the modifying agent increases the water reducing effect on hydraulic materials, and the amount of water required to prepare an aqueous slurry with a necessary fluidity for pouring may be decreased. In this way the real amount of the demolition agent in unit volume of the slurry is increased. Therefore, greater expansive stress will be generated.

Hydraulic setting materials used in the present invention include normal Portland cement, high early strength Portland cement, super high early strength Portland cement, ultra rapid hardening cement, alumina cement and the like. A tendency is observed that the bigger is the hydraulic property of the cement, after filling slurry of the cement in a hole, the smaller is the expansion stress in a given time and the slower is the propagation of cracks. This is based on the relation between the appearance of strength based on the hydraulic material and the strain caused by expansion stress from the hydration of quick lime. As the high early strength of the hydraulic material grows, the self-hydraulic property grows and therefore the strain or the appearance of expansion stress becomes smaller. For the above reasons, normal Portland cement is best used as a hydraulic material, and so-called mixed cement in which silica, fly ash, blast furnace slag or the like is mixed with the Portland cement is as effective as normal Portland cement.

According to the invention, the proper ratio for the hard-burned quick lime to hydraulic material is 30 to 95 parts by weight of quick lime to 5 to 70 parts by weight of hydraulic material. In the case that the amount of the powdery hard-burned quick lime in the mixture is more than 95 parts by weight and that the amount of hydraulic material is less than 5 parts by weight, the demolition agent usually spouts from the hole and the expansion stress on the brittle material decreases, since the poured slurry accumulates heat generated by hydration. To the contrary, in the case that the amount of the powdery quick lime is less than 30 parts by weight and that of hydraulic material is more than 70 parts by weight, the expansive stress is usually not strong enough to demolish the brittle material.

In the present invention, modifying agent is added at from 0.1 to 5 weight parts to the mixture of 30 to 95 parts by weight of a hard-burned quick lime and 5 to 70 parts by weight of a hydraulic material. In the case that the amount of modifying agent is less than 0.1 weight parts, the demolition agent may spout out from the pouring hole, especially when the temperature of the demolished material is higher than 20°C, since the heat generated by hydration of the fine powdery quick lime accelerates the hydration speed of the quick lime as a whole and the vapour pressure in the hole increases. In the case that the amount of the modifying agent is more than 5 weight parts, the expansion speed normally decreases significantly.

When the demolition agent of this invention is used to demolish the brittle materials, 30 to 50 parts by weight of water is typically added to 100 parts by weight of the demolition agent, and mixed to prepare an aqueous slurry, which is poured into a hole. After 16 to 20 hours, the slurry usually gives an expansion stress above 200 kg/cm².

The present invention is illustrated by the following non-limiting examples (in which parts and percentages are weight). In Example 1, reference is made to the accompanying drawings, in which:

Figure 1 is a perspective view of equipment for measuring expansion stress, and

Figure 2 is a graph showing the relationship between elapsed time and expansive stress generated by slurries of the demolition agents in this invention, when the slurries of the demolition agents are filled in the expansive stress measuring device of Figure 1.

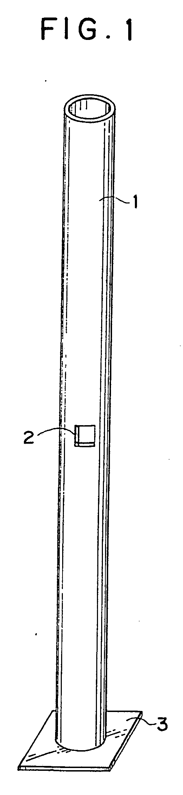

Figure 1 shows a carbon steel pipe 1 of the kind employed for ordinary piping and which is arranged vertically. The pipe 1 has an internal diameter of 36 mm and a length of 120 cm. Two paper strain gages 2 are adhered against each other on the pipe surface at half-way along the pipe length. Each paper consists of two gages with a length of 5 mm and a width of 3 mm which are set in an L-shape, in order that one paper gage is horizontal and the other one is vertical. The bottom of the steel pipe is sealed to steel plate 3 by welding.

Example 1

Limestone ($CaCO_3$ 94%) of 30 mm to 60 mm particle size was calcined at 1350°C for 60 hours in a shaft kiln of 7.5 m internal diameter and 30 m height, thereby giving a hard-burned quick lime of crystal size 20 to 30 micron which was then pulverized to a specific surface area of 3300 cm²/g (Blaine).

85 parts of the powdery hard-burned quick lime were mixed with 15 parts of a normal Portland cement (made by Onoda Cement Co. Ltd.). To samples of the mixture were added respective modifying agents as shown below in the amounts indicated by percent of the two-component mixture.

1. "Mighty" (Trade Mark) powder (made by Kao Soap Co. Ltd., a naphthalene sulphonic acid-formaline condensate type)

0.5%

2. "Melment" (Trade Mark) powder (made by Showa Denko Co. Ltd., a water-soluble melamin resin type)

1.0%

3. "Sanflo" (Trade Mark) powder (made by Sanyo-Kokusaku Pulp Co. Ltd., a lignin-type)

0.5%

4. "Mighty" powder (same as 1)

1.0%

5. "Sanflo" powder (same as 3)

1.0%

An aqueous slurry prepared by adding and mixing 35 parts of water to 100 parts of the resultant demolition agent was used at 5°C to fill a steel pipe as shown in Figure 1 to a height of 120 cm.

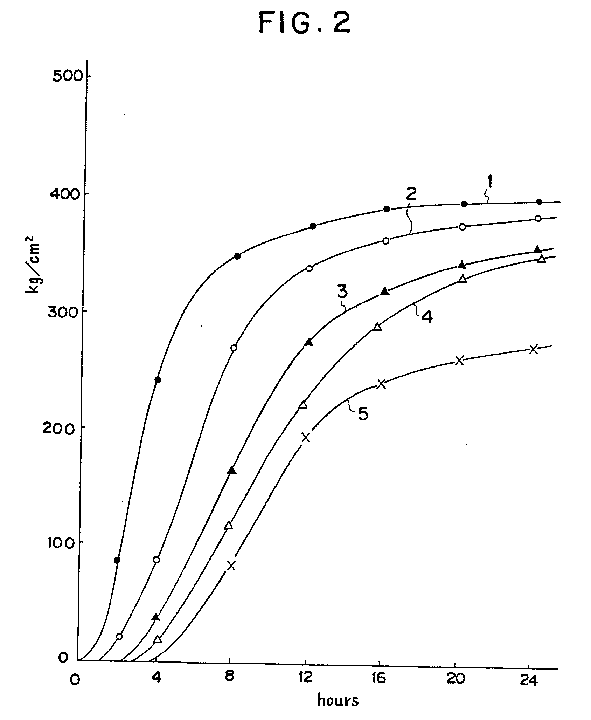

In the Figure 2, numerals 1, 2, 3, 4 or 5 indicate respectively the results for 0.5% of Mighty, 1% of Melment, 0.5% of Sanflo, 1% of Mighty, or 1% of Sanflo in the demolition agent. The lateral axis shows elapsed time and the longitudinal axis shows expansive stress. It will be seen that the present demolition agents give high expansive stress within a reasonably short time.

Example 2

A hole (40 mm in diameter and 30 cm in depth) was drilled in the middle of a concrete cylinder (20 cm in diameter and 40 cm in height) having the mechanical properties: compressive strength 410 kg/cm² and tensile strength 38 kg/cm².

A slurry obtained by mixing 80 parts of the hard-burned quick lime powder of Example 1, 20 parts of normal Portland cement, 0.5 part of "Mighty" as modifying agent and 38 parts of water was used to fill the hole, and the concrete cylinder allowed to stand at the atmospheric temperature of 5°C.

Three cracks had been generated radially from the position of the hole after 10 hours, and the concrete cylinder split into three small blocks after 12 hours.

Example 3

A hole (32 mm in diameter and 80 cm in depth) was drilled in the middle of a 2 m³ lump of limestone having the following mechanical properties: compressive strength 900 kg/cm², tensile strength 60 kg/cm². The same slurry as used in Example 2 was used to fill the hole, and the limestone lump allowed to stand at the atmospheric temperature of 30°C. A crack 10 mm in width occurred after an hour, and the lump of limestone was split into two blocks.

**Claims**

1. A method of demolition of a brittle material in which one or more holes are drilled in the brittle material, and the holes are filled with an aqueous slurry of a demolition agent which acts by generating expansive stress upon hydration, characterised in that the demolition agent comprises a powdery material which comprises 30 to 95 parts by weight of a powdery hard-burned quick lime calcined at 1300 to 1600°C with crystal size from 10 to 100 microns pulverized to 1500 to 5000 cm²/g (Blaine), 5 to 70 parts by weight of hydraulic material and relative to 100 parts by weight of the mixture of the powdery hard-burned quick lime and the hydraulic material, 0.1 to 5 parts by weight of a water reducing agent.

2. A method according to claim 1, wherein the crystal size of the hard-burned quick lime is 20 to 40 microns.

3. A method according to claim 1 or 2, wherein the hard-burned quick lime is prepared by calcining limestone for 1 to 7 days in a kiln.

4. A method according to claim 1, wherein the hydraulic material comprises at least one cement which is normal Portland cement, high early strength Portland cement, super high early strength Portland cement, ultra rapid hardening cement or a mixed cement which is silica, fly ash, blast furnace slag, or alumina cement mixed with Portland cement.

5. A method according to claim 4, wherein the hydraulic material comprises normal Portland cement.

6. A method according to any of claims 1 to 5, wherein the admixture comprises at least one water reducing agent which is a lignin, a sulphonate or a higher alcohol, an oxyorganic acid, an alkylarylsulphonate or a high condensate thereof, a polyoxyethylene alkylether, a polyol composite, a water-soluble melamine resin or a beta-naphthalene sulphonic acid-formaline condensate.

7. A method of preparing a demolition agent which comprises calcining limestone at 1300 to 1600°C to produce a hard-burned quick lime whose crystal size is 10 to 100 microns, pulverizing the resulting quick lime to 1500 to 5000 cm²/g (Blaine), mixing 5 to 70 parts by weight of a hydraulic material with 30 to 95 parts by weight of the powdery hard-burned quick lime, and adding to 100 parts by weight of the mixture of the hard-burned quick lime and the hydraulic material from 0.1 to 5 parts by weight of a modifying agent.

## Revendications

1. Procédé de démolition d'un matériau fragile dans lequel un ou plusieurs trous sont forés dans le matériau fragile, et les trous sont remplis d'un coulis aqueux d'un agent de démolition qui agit par création d'une contrainte de dilatation après hydratation caractérisé en ce que l'agent de démolition est un matériau en poudre qui contient 30 à 95 parties en poids de chaux vive fortement calcinée en poudre, calcinée entre 1300 et 1600°C, ayant une dimension cristalline de 10 à 100 microns, pulvérisée à une surface spécifique (Blaine) de 1500 à 5000 cm²/g, 5 à 70 parties en poids d'un matériau hydraulique et, par rapport à 100 parties en poids du mélange de chaux vive fortement calcinée en poudre et de matériau hydraulique, 0,1 à 5 parties en poids d'un agent de réduction d'eau.

2. Procédé selon la revendication 1, dans lequel la dimension cristalline de la chaux vive fortement calcinée est comprise entre 20 et 40 microns.

3. Procédé selon l'une des revendications 1 et 2, dans lequel la chaux vive fortement calcinée est préparée par calcination de calcaire pendant 1 à 7 jours, dans un four.

4. Procédé selon la revendication 1, caractérisé en ce que le matériau hydraulique comprend au moins un ciment qui est du ciment Portland normal, du ciment Portland à résistance initiale élevée, du ciment Portland à résistance initiale très élevée, du ciment à durcissement ultrarapide, ou un mélange de ciment qui est formé de silice, de cendres volantes, de laitier de haut-fourneau ou de ciment alumineux mélangé à du ciment Portland.

5. Procédé selon la revendication 4, dans lequel le matériau hydraulique est du ciment Portland normal.

6. Procédé selon l'une quelconque des revendications 1 à 5, dans lequel le mélange comprend au moins un agent de réduction d'eau qui est une lignine, un sulfonate d'un alcool supérieur, un acide oxyorganique, un alkylarylsulfonate ou un condensat élevé d'un tel composé, un alkyl éther de polyoxyéthylène, une substance composite de polyol, une résine mélamine hydrosoluble ou un condensat d'acide β-naphtalènesulfonique et de formaline.

7. Procédé de préparation d'un agent de démolition, qui comprend la calcination de calcaire entre 1300 et 1600°C afin que de la chaux vive fortement calcinée soit formée avec une dimension cristalline de 10 à 100 microns, la pulvérisation de la chaux vive résultante a une surface spécifique (Blaine) comprise entre 1500 et 5000 cm²/g, le mélange de 5 à 70 parties en poids d'un matériau hydraulique avec 30 à 95 parties en poids de poudre de chaux vive fortement calcinée, et l'addition, à 100 parties en poids de chaux vive fortement calcinée et du matériau hydraulique, de 0,1 à 5 parties en poids d'un adjuvant modificateur.

## Patentansprüche

1. Verfahren zum Sprengen von brüchigem Material, in dem in das brüchige Material ein oder mehrere Löcher gebohrt werden und die Löcher mit einer wässrigen Aufschlämmung eines Sprengmittels gefüllt werden, das durch Erzeugung von Expansionsdruck mit Hilfe von Hydratation wirkt, dadurch gekennzeichnet, daß das Sprengmittel einen pulverförmigen Stoff umfaßt, der 30 bis 95 Gewichtsteile eines pulverförmigen hartgebrannten zwischen 1300 und 1600°C kalzinierten Ätzkalkes mit einer Kristallgröße zwischen 10 und 100 Mikron pulverisiert auf 1500 bis 5000 cm²/g (Blaine), 5 bis 70 Gewichtsteile hydraulischen Stoff und auf 100 Gewichtsteile der Mischung des pulverförmigen hartgebrannten Ätzkalkes und des hydraulischen Stoffes 0,1 bis 5 Gewichtsteile eines wasser-reduzierenden Mittels enthält.

2. Verfahren nach Anspruch 1, worin die Kristallgröße des hartgebrannten Ätzkalkes zwischen 20 und 40 Mikron beträgt.

3. Verfahren nach Anspruch 1 oder 2, worin der hartgebrannte Ätzkalk durch Kalzinieren von Kalkstein während 1—7 Tagen in einem Ofen hergestellt wird.

4. Verfahren nach Anspruch 1, worin der hydraulische Stoff zumindest einen Zement, nämlich normalen Portlandzement, hochwertigen Portlandzement, extra-hochwertigen Portlandzement, extra-schnellbindenden Zement oder einen Mischzement, nämlich Silika, Flugasche Hochofenschlacke, oder Tonerdezement gemischt mit Portlandzement umfaßt.

5. Verfahren nach Anspruch 4, worin der hydraulische Stoff normalen Portlandzement umfaßt.

6. Verfahren nach einem der Ansprüche 1 bis 5, worin der Zusatz zumindest ein wasserreduzierendes Mittel, welches ein Lignin ist, ein Sulfonat oder einen höheren Alkohol, eine oxyorganische Säure, ein Alkylarylsulfonat oder ein hochkondensiertes Produkt davon, einen Polyoxyäthylenalkyläther, ein Polyolcomposite, ein wasserlösliches Melaminharz oder ein beta-Naphthalinsulfosäure-Formalinkondensat umfaßt.

7. Verfahren zur Herstellung eines Sprengmittels bi dem Kalkstein zwischen 1300 und 1600°C zur Erzeugung eines hartegebrannten Ätzkalkes kalziniert wird, dessen Kristallgröße zwischen 10 und 100 Mikron beträgt, der entstehende Ätzkalk auf 1500 bis 5000 cm²/g (Blaine) pulverisiert wird, 5 bis 70 Gewichtsteile eines hydraulischen Stoffes mit 30 bis 95 Gewichtsteilen des pulverförmigen, hartgebrannten Ätzkalkes gemischt und auf 100 Gewichtsteile der Mischung des hartgebrannten Ätzkalkes und des hydraulischen Stoffes 0,1 bis 5 Gewichtsteile eines Modifizierungsmittels beigemischt werden.

# FIG. 1

# FIG. 2